# EUROPÄISCHE PATENTANMELDUNG

(11) **EP 4 806 730 A1**
(43) Veröffentlichungstag der Anmeldung: **16.09.2026**
(21) Anmeldenummer: 26163082.6
(22) Anmeldetag: 09.03.2026
(51) Int. Cl.: B60R 21/0134, B60G 17/0165, B60R 19/20, B60G 17/0195, B60R 19/56

(54) **EINRICHTUNG ZUR PRÄVENTION EINER UNTERFAHRKOLLISION**

(30) Priorität: 10.03.2025 DE 102025108861
(71) Anmelder: Volkswagen Aktiengesellschaft, 38440 Wolfsburg (DE)
(72) Erfinder: Preu, Victor, 38440 Wolfsburg (DE); Sacher, Dr. Patrick, 38440 Wolfsbrug (DE); Simon, Steve, 38440 Wolfsburg (DE); Putter, Roman, 38440 Wolfsburg (DE); Effenberger, Witali, 38440 Wolfsburg (DE)

(57) **Zusammenfassung**

Die Erfindung betrifft eine Einrichtung (100) zur Prävention einer Unterfahrkollision zwischen einem ersten Fahrzeug (10) und einem zweiten Fahrzeug (11), wobei das zweite Fahrzeug (11) einen Unterfahrbereich (12) aufweist. Erfindungsgemäß ist vorgesehen, dass die Einrichtung (100) zum Datenaustausch mit einer Umfeldsensorik (18) und einer Auswerteeinheit (19) verbunden ist, die Kombination aus der Umfeldsensorik (18) und der Auswerteeinheit (19) eingerichtet ist, um eine unvermeidbare Unterfahrkollision zu prädizieren, und die Einrichtung (100) im Ansprechen auf eine unvermeidbare Unterfahrkollision eingerichtet ist, um ein Unterfahren des ersten Fahrzeugs (10) mittels einer Vorrichtung (20) zu vermeiden.

## Beschreibung

Die Erfindung betrifft eine Einrichtung zur Prävention einer Unterfahrkollision zwischen einem ersten Fahrzeug und einem zweiten Fahrzeug, wobei das zweite Fahrzeug einen Unterfahrbereich aufweist.

Der moderne Straßenverkehr ist als Mischverkehr ausgebildet, an dem Fahrzeuge unterschiedlicher Größe und Bauart teilnehmen. Insbesondere nehmen am modernen Straßenverkehr Personenkraftwagen (PKW) und Lastkraftwagen (LKW) teil. PKW sind in der Regel für 1 bis 9 Personen ausgelegt und weisen eine vergleichsweise geringe Sitzhöhe über der Straße von ca. 0,4 m bis 1 m auf. LKW sind demgegenüber als Nutzfahrzeuge zum Transport von schweren Lasten ausgebildet und weisen eine Ladefläche auf, die sich in einer Höhe von ca. 1 m bis 1,5 m über der Straße erstreckt. Dieser Höhenunterschied ist für etwaige Kollisionen zwischen einem PKW und einem LKW kritisch, denn die vergleichsweise hohe Ladefläche des LKW bildet für den PKW einen Unterfahrbereich, sodass ein etwaiger Aufprall eines PKW an einem LKW nicht durch eine Knautschzone des PKW abgebremst wird. Indes kollidiert bei einer Unterfahrkollision die Karosserie des PKW im Bereich der A-Säulen mit der Ladeflächenkante des LKW, die nicht für derartige Belastungen ausgelegt sind, und was daher regelmäßig zu Unfällen mit erheblichen Personenschäden führt.

Um die Auswirkungen derartiger Unterfahrkollisionen zu reduzieren, sind LKW mit einem Unterfahrschutz ausgestattet. Beispielsweise sind als Unterfahrschutz Gestänge mit mindestens einem Querträger bekannt, der den Raum zwischen der Ladefläche und der Straße unter Beachtung eines erforderlichen Mindestabstands begrenzt. In den seitlichen Bereichen eines LKW, insbesondere zwischen den Rädern, kann der Querträger des Unterfahrschutzes bis kurz über die Aufstandsebene reichen. Insbesondere im Heckbereich der LKW ist der erforderliche Mindestabstand demgegenüber vergleichsweise groß, damit der Unterfahrschutz bei unterschiedlichen Steigungen der Fahrbahn nicht auf der Straße aufschlägt. Ferner sind solche Gestänge wenig stabil ausgebildet. Daher bieten sie insbesondere bei Kollisionen mit hohen Differenzgeschwindigkeiten kaum einen ausreichenden Schutz.

Aus dem Stand der Technik, insbesondere aus der DE 10 2022 105 078 A1, der WO 2007 / 0 102 755 A1 und der KR 10 2005 019 640 A sind weitere Vorrichtungen zur Prävention von Unterfahrkollisionen bekannt, die sich jedoch als verbesserungsbedürftig herausgestellt haben. Insbesondere liefern bekannte Unterfahrschutzvorrichtungen keinen hinreichenden Schutz, um die Auswirkungen einer Unterfahrkollisionen wirksam zu reduzieren und damit das Verletzungsrisiko von Verkehrsteilnehmern nachhaltig zu verringern.

In der DE 10 2024 004 358 A1 wird ein Verfahren zur Optimierung des Insassenschutzes bei einer Kollision eines Kraftfahrzeugs beschrieben, wobei das Kraftfahrzeug ein höhenverstellbares Fahrwerk, wenigstens einen Sensor sowie eine mit dem wenigstens einen Sensor und dem höhenverstellbaren Fahrwerk verbundene Steuerung aufweist, wobei mithilfe wenigstens eines Sensors vor der Kollision ein Hindernis detektiert wird, wobei ein Fahrwerksniveau des höhenverstellbaren Fahrwerks vor der Kollision angepasst wird, wobei das Hindernis mithilfe des wenigstens einen Sensors vermessen wird und Vermessungsdaten erzeugt werden, wobei eine optimales Fahrwerksniveau auf der Basis der Vermessungsdaten bestimmt wird, wobei das optimale Fahrwerksniveau vor der Kollision eingestellt wird.

Die DE 10 2022 105 078 A1 betrifft ein Kraftfahrzeug aufweisend eine Karosserie mit einem Karosserieunterbau sowie mit zumindest einer Fahrzeugsäule, welche mit dem Karosserieunterbau verbunden ist, aufweisend eine Sensoreinrichtung mit zumindest einem Sensor zur Generierung von Sensordaten und aufweisend eine Datenverarbeitungseinrichtung zur Verarbeitung der Sensordaten, wobei der zumindest eine Sensor in die zumindest eine Fahrzeugsäule integriert ist.

Die DE 10 2017 217 026 A1 betrifft eine Schutzvorrichtung für ein Fahrzeug, mit einer Crashstruktur, einer Umfeldsensorik und einer Auswerte- und Steuereinheit, welche über mindestens eine Schnittstelle mit der Umfeldsensorik gekoppelt ist und Informationen der Umfeldsensorik zur Objekterkennung im Fahrzeugumfeld und zur Aufprallerkennung auswertet, wobei die Auswerte- und Steuereinheit bei einem erkannten bevorstehenden Aufprall an einem Objekt aus den Informationen der Umfeldsensorik einen wahrscheinlichen Auftreffbereich am Objekt bestimmt, sowie ein Fahrzeug mit einer solchen Schutzvorrichtung. Hierbei ermittelt die Auswerte- und Steuereinheit aus den Informationen der Umfeldsensorik eine Struktur des Objekts am wahrscheinlichen Auftreffbereich und ist über mindestens eine Schnittstelle mit mindestens einem Aktuator gekoppelt ist, wobei die Auswerte- und Steuereinheit eine vertikale Position der Crashstruktur vor dem Aufprall über den mindestens einen Aktuator an die ermittelte Struktur des Objekts am wahrscheinlichen Auftreffbereich anpasst.

Die DE 10 2013 021 346 A1 offenbart ein Verfahren zum Betrieb eines Sicherheitssystems eines ersten Kraftfahrzeugs zur Kollisionsvermeidung und/oder Kollisionsfolgenminderung, wobei wenigstens ein die mögliche Kollision mit einem zweiten Kraftfahrzeug beschreibender Kollisionsparameter durch Auswertung von Umfelddaten über das Umfeld des eigenen Kraftfahrzeugs und Egodaten über das eigene Kraftfahrzeug ermittelt wird und bei Erfüllung wenigstens eines den Kollisionsparameter auswertenden Kollisionskriteriums wenigstens ein weiteres Fahrzeugsystem zur Durchführung einer Maßnahme angesteuert wird, wobei wenigstens ein auf einen Unterfahrunfall bezogener Kollisionsparameter in Abhängigkeit eines von dem zweiten Kraftfahrzeug über Kraftfahrzeug-zu-Kraftfahrzeug-Kommunikation übermittelten Nickwinkels des zweiten Kraftfahrzeugs ermittelt und zur Auslösung einer auf die Verhinderung und/oder Folgenminderung eines Unterfahrunfalls zielenden Maßnahme bei Erfüllung eines Auslösekriteriums ausgewertet wird.

Mit der DE 103 37 620 A1 wird ein Kraftfahrzeug, insbesondere ein Personenkraftwagen, mit einem Pre-Safe-System vorgeschlagen, welches wenigstens eine Fahrzeugumgebungs-Erkennungseinrichtung und eine Federungs- und Dämpfungseinrichtung aufweist. Die Federungs- und Dämpfungseinrichtung ist zwischen einem Fahrwerk und einer Karosserie angeordnet und in Abhängigkeit der von der Fahrzeugumgebungs-Erkennungseinrichtung aufgenommenen und in einer Datenauswerteeinrichtung ausgewerteten Signale ansteuerbar. Die Datenauswerteeinrichtung der Fahrzeugumgebungs-Erkennungseinrichtung ist mit einem Steuergerät einer die Federungs- und Dämpfungseinrichtung ansteuernden aktiven Fahrwerkregelung, mittels der eine für die jeweilige Aufprallsituation vordefinierte Fahrzeugniveauverstellung durchgeführt wird, verknüpft.

Die DE 199 23 708 A1 betrifft ein Kraftfahrzeug mit einer zwischen Fahrwerk und Karosserie angeordneten Federungs- und Dämpfungseinrichtung. Um die Verletzungsgefahr für Fahrzeuginsassen bei einem Unfall zu mindern, ist eine Sensoreinrichtung zur Detektion eines drohenden Aufpralls vorgesehen, wobei die Sensoreinrichtung im Falle eines drohenden Aufpralls ein Signal an eine Steuereinrichtung des Kraftfahrzeuges abgibt, die dann mittels der Federungs- und Dämpfungseinrichtung vor dem Aufprall eine Lageverstellung der Karosserie mindestens auf der Aufprallseite bewirkt.

Hiervon ausgehend ist es die Aufgabe der Erfindung, eine Einrichtung zur Prävention einer Unterfahrkollision zwischen einem ersten Fahrzeug und einem zweiten Fahrzeug anzugeben, mit der die vorgenannten Probleme behoben werden. Insbesondere sollen sich mit der Einrichtung die Auswirkungen einer Unterfahrkollision wirksam reduzieren und damit das Verletzungsrisiko von Verkehrsteilnehmern nachhaltig verringern lassen.

Diese Aufgabe wird durch die Einrichtung nach Anspruch 1 gelöst. Von einer Einrichtung zur Prävention einer Unterfahrkollision zwischen einem ersten Fahrzeug und einem zweiten Fahrzeug, wobei das zweite Fahrzeug einen Unterfahrbereich aufweist, ist erfindungsgemäß vorgesehen, dass
- die Einrichtung zum Datenaustausch mit einer Umfeldsensorik und einer Auswerteeinheit verbunden ist,
- die Kombination aus der Umfeldsensorik und der Auswerteeinheit eingerichtet ist, um eine unvermeidbare Unterfahrkollision zu prädizieren, und
- die Einrichtung im Ansprechen auf eine unvermeidbare Unterfahrkollision eingerichtet ist, um ein Unterfahren des ersten Fahrzeugs mittels einer Vorrichtung zu vermeiden.

Das erste Fahrzeug kann insbesondere ein PKW sein. Das zweite Fahrzeug kann als Nutzfahrzeug, insbesondere als LKW, LKW-Anhänger, LKW-Auflieger oder als landwirtschaftliches Nutzfahrzeug ausgebildet sein.

Im Zusammenhang mit fahrzeuginternen Rückhaltesystemen und/oder Notbremsassistenzsystemen sind solche Umfeldsensoriken in Kombination mit Auswerteeinheiten zur Reduktion von unvermeidbaren Kollisionen bekannt. Auf diese Systeme kann im Rahmen der vorliegenden Erfindung zur Prävention von Unterfahrkollisionen zurückgegriffen werden. Insgesamt werden hierdurch die Auswirkungen einer Unterfahrkollision wirksam reduziert, und das Verletzungsrisiko von Verkehrsteilnehmern wird dadurch nachhaltig verringert.

Vorteilhafte Weiterbildungen der Erfindung werden nachfolgend und in den Unteransprüchen angegeben.

Vorzugsweise ist vorgesehen, dass die Vorrichtung als reversible oder irreversible Aktorik des ersten Fahrzeugs ausgebildet ist, wobei mittels der Aktorik das Fahrzeug derart anhebbar ist, dass eine Kollision des ersten Fahrzeugs mit dem zweiten Fahrzeug außerhalb des Unterfahrbereichs erfolgt. Durch das Anheben des ersten Fahrzeugs erfolgt eine Kollision des ersten Fahrzeugs mit dem zweiten Fahrzeug oberhalb des Unterfahrbereiches, insbesondere oberhalb der unteren Kante der Ladefläche, wo das zweite Fahrzeug typischerweise Flächenbegrenzungselemente des Laderaums aufweist. Eine Kollision mit diesen Flächen führt unmittelbar dazu, dass die Knautschzone des ersten Fahrzeugs vollständig ausgenutzt werden kann, um die Energie beim Aufprall in Verformungsenergie umzuwandeln. Eine Unterfahrkollision, insbesondere eine Kollision zwischen der Ladeflächenkante und den A-Säulen des ersten Fahrzeugs wird hierdurch vermieden.

Vorzugsweise ist vorgesehen, dass die reversible Aktorik als elektrische, pneumatische oder hydraulische Aktorik ausgebildet ist, insbesondere als Luftfahrwerk, adaptive Fahrwerksregelung oder Änderungseinrichtung der Bremslast auf Hinter- und Vorderachse.

Bei einer Ausgestaltung der reversiblen Aktorik als Luftfahrwerk kann insbesondere eine Luftfederung an der Vorderachse des Fahrzeugs unmittelbar zum Anheben des Fahrzeugs genutzt werden. Alternativ kann das Fahrzeug auch vollständig, also an der Vorderachse und an der Hinterachse angehoben werden.

Die Bremslast der Vorderachse ist standardmäßig etwas höher als die Bremslast der Hinterachse, wobei in der Regel ein Verhältnis von 60/40 eingestellt ist. Dies führt während eines Bremsvorgangs zu einem Absenken der Vorderachse und einem Anheben der Hinterachse. Durch eine Verschiebung der Bremslast auf die Hinterachse, idealerweise erst kurz vor der unvermeidbaren Kollision, kann diese Wirkung umgekehrt oder zumindest reduziert werden.

Vorzugsweise ist vorgesehen, dass die irreversible Aktorik als pyrotechnische Vorrichtung ausgebildet ist. Mittels der pyrotechnische Vorrichtung wird mindestens eine gezielte Explosion verursacht, deren Druckwelle derart kanalisiert wird, dass sich ein Impuls ergibt, der das Fahrzeug nach oben beschleunigt. Hierdurch ergibt sich im Vergleich zu den zuvor beschriebenen reversiblen Aktoriken eine vergleichsweise schnellere Höhenverstellung, weshalb eine vergleichsweise kürzere Reaktionszeit einzuplanen ist.

Erfindungsgemäß ist vorgesehen, dass die Vorrichtung als Schutzstruktur des ersten Fahrzeugs ausgebildet ist, die von einer passiven (eingefahrenen) Position in eine aktive (ausgefahrene) Position überführbar ist. Hierbei sind insbesondere zwei unterschiedliche Ausführungen vorgesehen.

Insbesondere ist vorgesehen, dass die Schutzstruktur als Airbag ausgebildet ist. Ein solcher Airbag ist im Bereich des vorderen Stoßfängers des ersten Fahrzeugs ausgebildet und wird in die x-Richtung eines Fahrzeugkoordinatensystems explosionsartig entfaltet. Die Höhe des entfalteten Airbags ist dabei so gewählt, dass der entfaltete Airbag den Unterfahrbereich typischer zweiter Fahrzeuge überragt, sodass das erste Fahrzeug nicht in den Unterfahrbereich eintaucht.

Alternativ und/oder additiv ist vorzugsweise vorgesehen, dass die Schutzstruktur mehrere Teleskopstangen aufweist, die in der passiven Position eingefahren und in der aktiven Position derart ausgefahren sind, dass die Teleskopstangen einen Käfig bilden. Die Teleskopstangen können beispielsweise innerhalb des Daches des ersten Fahrzeugs und/oder der Motorhaube angeordnet sein, so dass sich im ausgefahrenen Zustand der Teleskopstangen ein Käfig ergibt, der zwischen der Fahrerkabine und dem Unterfahrbereich des zweiten Fahrzeugs ausgebildet ist. Auch hierdurch wird wirksam vermieden, dass das erste Fahrzeug in den Unterfahrbereich des zweiten Fahrzeugs eindringt.

Im Rahmen einer vorteilhaften Ausgestaltung ist vorgesehen, dass die Vorrichtung als reversible oder irreversible Aktorik des zweiten Fahrzeugs ausgebildet ist, wobei mittels der Aktorik das zweite Fahrzeug derart absenkbar ist, dass eine Kollision des ersten Fahrzeugs mit dem zweiten Fahrzeug außerhalb des Unterfahrbereiches erfolgt.

Vorzugsweise ist vorgesehen, dass die reversible Aktorik als elektrische, pneumatische oder hydraulische Aktorik ausgebildet ist. Alternativ ist vorgesehen, dass die irreversible Aktorik als pyrotechnische Vorrichtung ausgebildet ist.

Die Vorrichtung kann im Rahmen einer vorteilhaften Ausgestaltung als Schutzstruktur des zweiten Fahrzeugs ausgebildet sein, die von einer passiven (eingefahrenen) Position in eine aktive (ausgefahrene) Position überführbar ist. Insbesondere ist vorgesehen, dass die Schutzstruktur als Airbag ausgebildet ist, der vorzugsweise am Heck des zweiten Fahrzeugs derart montiert ist, dass der Unterfahrbereich bei entfaltetem Airbag ausgefüllt ist, sodass das erste Fahrzeug nicht in den Unterfahrbereich geschoben werden kann. Beispielsweise kann der eingefaltete (nicht entfaltete) Airbag an der Unterseite der Ladefläche des zweiten Fahrzeugs angeordnet sein.

Die Umfeldsensorik umfasst insbesondere Sensoren, die am ersten Fahrzeug, am zweiten Fahrzeug oder innerhalb der Verkehrsinfrastruktur angeordnet sind. Erforderlichenfalls sind das erste Fahrzeug und das zweite Fahrzeug zum Datenaustausch unmittelbar über eine C2C- oder mittelbar über eine C2X-Kommunikation miteinander verbunden. Beispielsweise sind die Sensoren zumindest teilweise als Radarsensoren und/oder Kamerasensoren ausgestaltet. Konkrete Ausführungsformen der Erfindung werden nachfolgend mit Bezug auf die Figuren beschrieben. Es zeigen:
- Fig. 1a: eine erste Verkehrssituation mit einem ersten und einem zweiten Fahrzeug,
- Fig. 1b: eine zweite Verkehrssituation mit einem ersten und einem zweiten Fahrzeug,
- Fig. 1c: eine dritte Verkehrssituation mit einem ersten und einem zweiten Fahrzeug,
- Fig. 2a: eine vierte Verkehrssituation mit einem ersten und einem zweiten Fahrzeug und
- Fig. 2b: eine fünfte Verkehrssituation mit einem ersten und einem zweiten Fahrzeug.

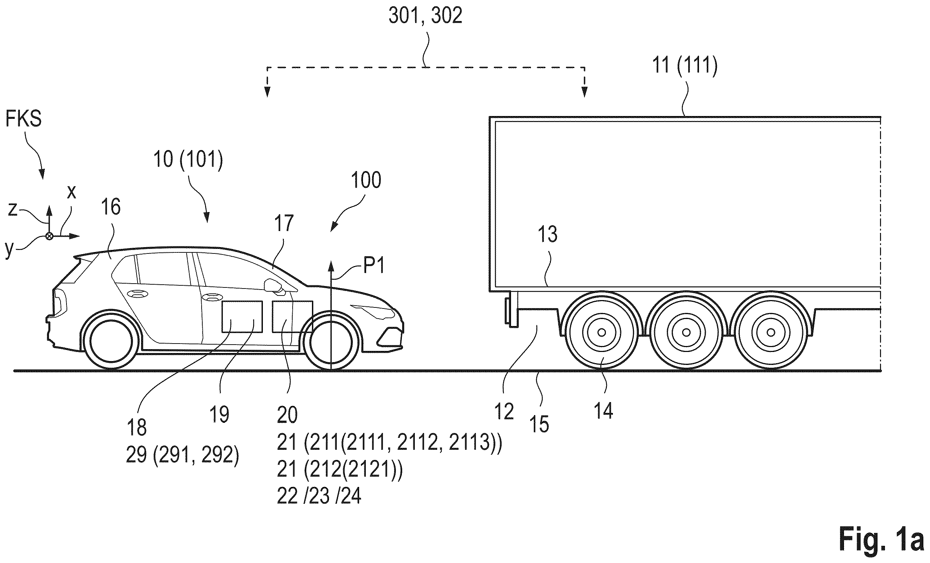

In Fig. 1a ist eine erste Verkehrssituation gezeigt, bei der ein erstes Fahrzeug 10, im dargestellten Fall ein PKW 101, hinter einem zweiten Fahrzeug 11, im dargestellten Fall ein LKW 111, hinterherfährt. Das erste Fahrzeug 10 besitzt eine Einrichtung 100 zur Prävention einer Unterfahrkollision zwischen dem ersten Fahrzeug 10 und dem zweiten Fahrzeug 11, wobei das zweite Fahrzeug 11 einen Unterfahrbereich 12 aufweist. Der Unterfahrbereich 12 ist im dargestellten Ausführungsbeispiel ein Bereich des zweiten Fahrzeugs 11, der nach oben hin durch die Ladefläche 13 des LKW 111, nach vorne durch die Ränder 14 des LKW 111 und nach unten durch die Fahrbahnoberfläche 15 begrenzt ist. Die Richtungsangaben beziehen sich dabei auf ein Fahrzeugkoordinatensystem FKS. Ein solcher Unterfahrbereich 12 ist insbesondere bei einem Auffahrunfall kritisch, denn das erste Fahrzeug 10 dringt dabei in den Unterfahrbereich 12 ein, und die Fahrzeugkabine 16 kollidiert im Bereich der A-Säulen 17 als erstes mit der rückwärtigen Kante der Ladefläche 13, was zu Unfällen mit schweren Personenschäden führen kann. Die Einrichtung 100 ist zum Datenaustausch mit einer Umfeldsensorik 18 und einer Auswerteeinheit 19 verbunden, wobei die Kombination aus der Umfeldsensorik 18 und der Auswerteeinheit 19 eingerichtet ist, um eine unvermeidbare Unterfahrkollision zu prädizieren. Ferner ist die Einrichtung 100 im Ansprechen auf eine unvermeidbare Unterfahrkollision eingerichtet, um ein Unterfahren des ersten Fahrzeugs 10 mittels einer Vorrichtung 20 zu vermeiden.

Die Vorrichtung 20 ist als Aktorik 21 des ersten Fahrzeugs 10 ausgebildet, wobei mittels der Aktorik 21 das erste Fahrzeug 10 derart in Pfeilrichtung P1 anhebbar ist, dass eine Kollision des ersten Fahrzeugs 10 mit dem zweiten Fahrzeug 11 außerhalb des Unterfahrbereichs 12 erfolgt. Im dargestellten Ausführungsbeispiel soll die unvermeidbare Kollision zwischen dem ersten Fahrzeug 10 und dem zweiten Fahrzeug 11 oberhalb der Ladefläche 13 erfolgen, so dass die Wirkung der Knautschzone des ersten Fahrzeugs 10 ausgenutzt werden kann. Zum Anheben des ersten Fahrzeugs 10 können unterschiedliche Aktoriken 21 vorgesehen sein, nämlich reversible Aktoriken 211 und irreversible Aktoriken 212. Reversible Aktoriken 211 können insbesondere als elektrische Aktoriken 2111, pneumatische Aktorik 2112 oder hydraulische Aktoriken 2113 ausgebildet sein und sind als Luftfahrwerk 22, adaptive Fahrwerksregelung 23 oder Änderungseinrichtung 24 der Bremslast auf Hinter- und Vorderachse ausgebildet. Eine irreversible Aktorik 212 ist beispielsweise als pyrotechnische Vorrichtung 2121 ausgebildet.

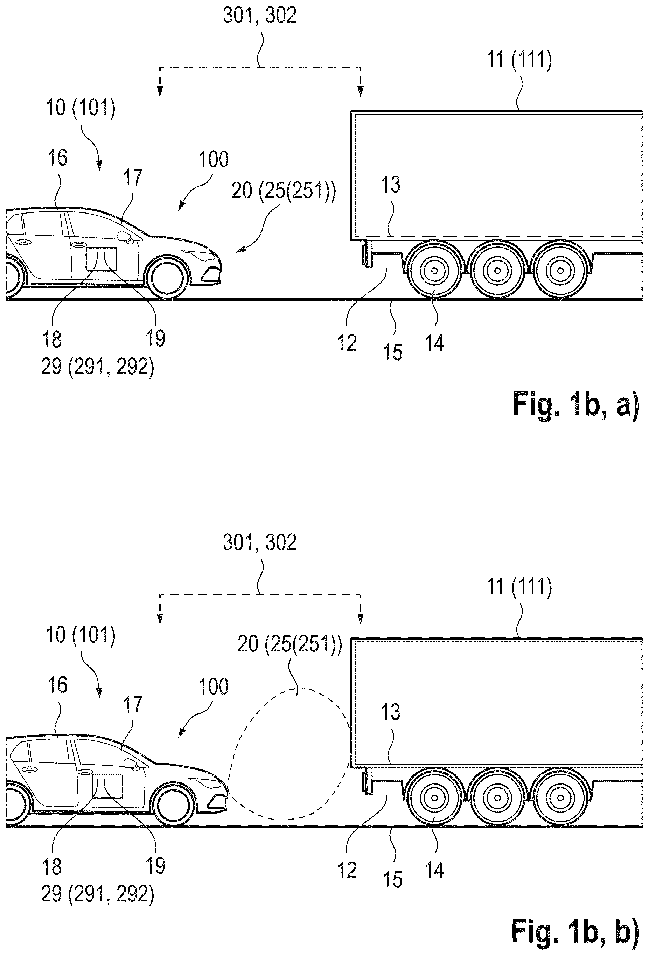

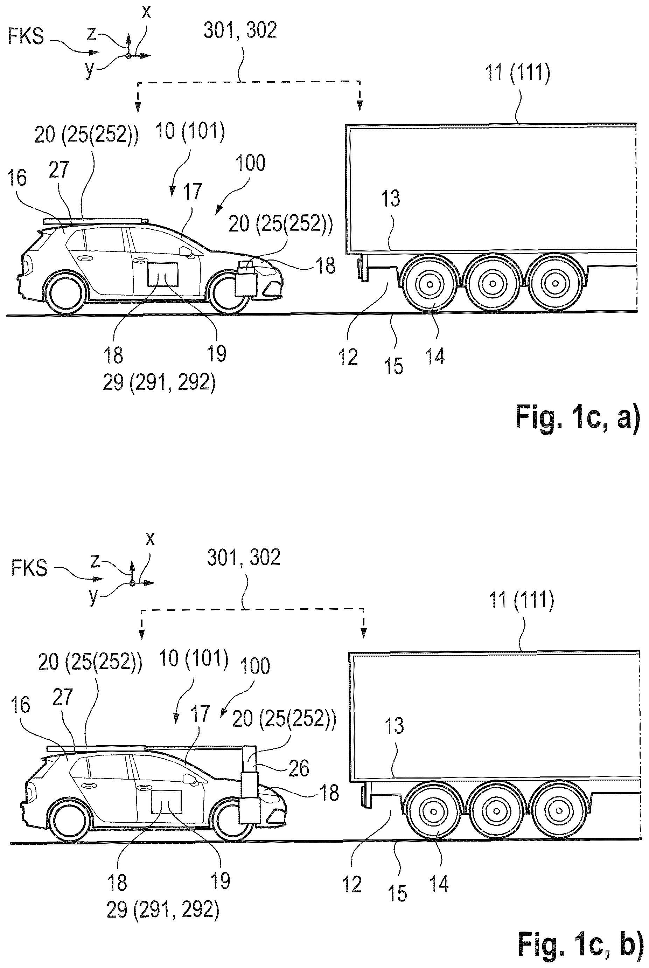

Die Fig. 1b, c zeigen zwei Ausführungsbeispiele, nach denen die Vorrichtung 20 jeweils als Schutzstruktur 25 des ersten Fahrzeugs 10 ausgebildet ist, die von einer passiven (eingefahrenen) Position in eine aktive (ausgefahrene) Position überführbar ist.

Nach der Ausführungsform nach Fig. 1b ist die Schutzstruktur 25 als Airbag 251 ausgebildet. Der Airbag 251 ist im eingefalteten Zustand im vorderen Stoßfängerbereich des ersten Fahrzeugs 10 verstaut (Teilfigur a)) und ist mit einer (nicht gezeigten) Druckluftquelle verbunden, wie beispielsweise einer Druckluftflasche oder einem Kompressor. **Im** Ansprechen auf die Registrierung einer unvermeidbaren Unterfahrkollision wird der Airbag 251 mittels der Druckluftquelle entfaltet und füllt hierdurch den Unterfahrbereich 12 derart aus, dass das erste Fahrzeug 10 nicht in den Unterfahrbereich 12 eintauchen kann (Teilfigur b)).

Nach der Ausführungsform nach Fig. 1c weist die Schutzstruktur 25 mehrere Teleskopstangen 252 auf, die in der passiven Position (Teilfigur a)) eingefahren und in der aktiven Position (Teilfigur b)) derart ausgefahren sind, dass die Teleskopstangen 252 einen Käfig 26 bilden. Die Teleskopstangen 252 sind innerhalb des Daches 27 und der Motorhaube 28 des ersten Fahrzeugs 10 angeordnet, so dass sich im ausgefahrenen Zustand der Teleskopstangen 252 ein Käfig 26 bildet, der zwischen der Fahrerkabine 16 und dem Unterfahrbereich 12 des zweiten Fahrzeugs 11 ausgebildet ist. Auch hierdurch wird wirksam vermieden, dass das erste Fahrzeug 10 in den Unterfahrbereich 12 des zweiten Fahrzeugs 11 eindringt.

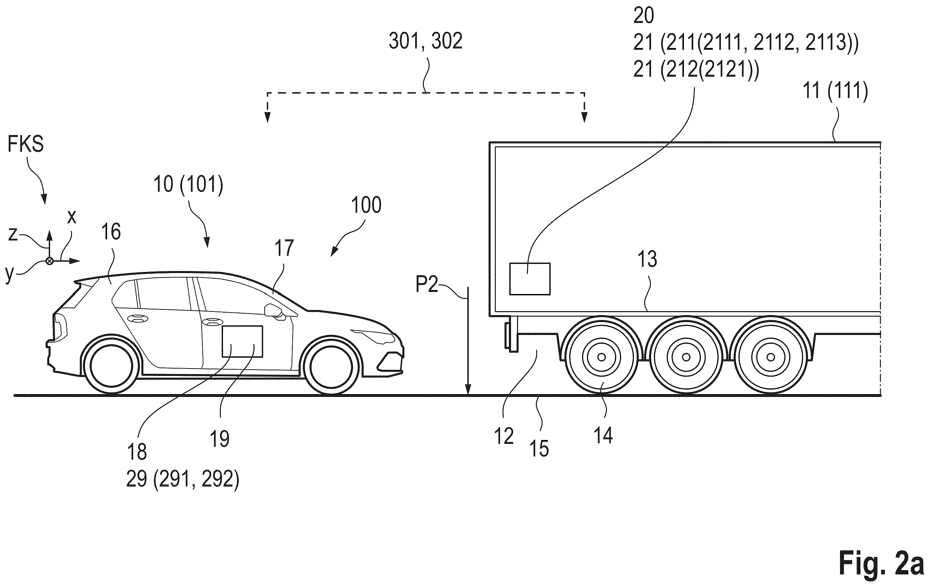

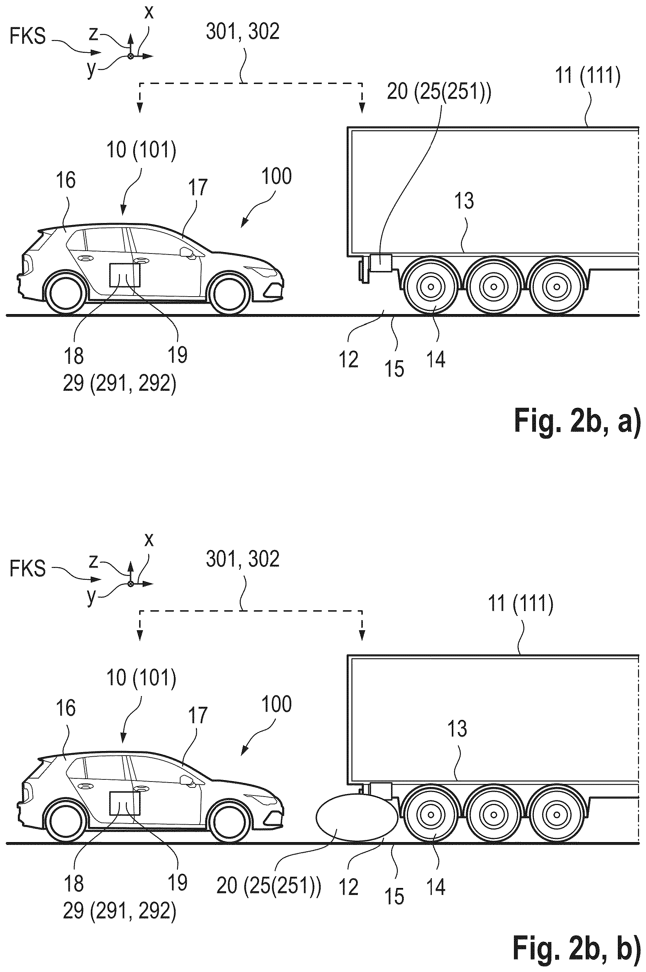

Die Vorrichtung 20 kann im Rahmen von weiteren Ausführungsformen gemäß den Fig. 2a, b als reversible Aktorik 211 oder irreversible Aktorik 212 des zweiten Fahrzeugs 11 ausgebildet sein.

Bei der Ausführungsform nach Fig. 2a ist vorgesehen, dass mittels der Aktorik 21 das zweite Fahrzeug 11 derart in Pfeilrichtung P2 absenkbar ist, dass eine Kollision des ersten Fahrzeugs 10 mit dem zweiten Fahrzeug 11 außerhalb des Unterfahrbereiches 12 erfolgt. Die reversible Aktorik 211 ist als elektrische Aktorik 2111, pneumatische Aktorik 2112 oder hydraulische Aktorik 2113 ausgebildet. Die irreversible Aktorik 212 ist demgegenüber als pyrotechnische Vorrichtung 2121 ausgebildet.

Bei der Ausführungsform nach Fig. 2b ist vorgesehen, dass die Vorrichtung 20 als Schutzstruktur 25 des zweiten Fahrzeugs 11 ausgebildet ist, die von einer passiven (eingefahrenen) Position (Teilfigur a)) in eine aktive (ausgefahrene) Position (Teilfigur b)) überführbar ist, wobei die Schutzstruktur 25 im gezeigten Ausführungsbeispiel als Airbag 251 ausgebildet ist, der mit einer (nicht gezeigten) Druckluftquelle, wie beispielsweise einer Druckluftflasche oder einem Kompressor, verbunden ist. Im Ansprechen auf die Registrierung einer unvermeidbaren Unterfahrkollision wird der Airbag mittels der Druckluftquelle entfaltet und füllt hierdurch den Unterfahrbereich 12 derart aus, dass das erste Fahrzeug 10 nicht in den Unterfahrbereich 12 eintauchen kann.

Unabhängig von der konkreten Ausführungsform der Vorrichtung 20 ist vorgesehen, dass die Umfeldsensorik 18 Sensoren 29 umfasst, die am ersten Fahrzeug 10 (Fig. 1a, b, c), am zweiten Fahrzeug 11 (Fig. 2a, b) oder innerhalb der Verkehrsinfrastruktur angeordnet sind. Hierbei sind die Sensoren 29 zumindest teilweise als Radarsensoren 291 oder als Kamerasensoren 292 ausgestaltet, und das erste Fahrzeug 10 und das zweite Fahrzeug 11 sind zum Datenaustausch unmittelbar über eine C2C-Kommunikation 301 oder mittelbar über eine C2X-Kommunikation 302 miteinander verbunden.

### Bezugszeichenliste

- 100: Einrichtung

- 10: erstes Fahrzeug
- 101: PKW
- 11: zweites Fahrzeug
- 111: LKW
- 12: Unterfahrbereich
- 13: Ladefläche
- 14: Rad
- 15: Fahrbahnoberfläche
- 16: Fahrzeugkabine
- 17: A-Säule
- 18: Umfeldsensorik
- 19: Auswerteeinheit

- 20: Vorrichtung
- 21: Aktorik
- 211: reversible Aktorik
- 2111: elektrische Aktorik
- 2112: pneumatische Aktorik
- 2113: hydraulische Aktorik
- 212: irreversible Aktorik
- 2121: pyrotechnische Vorrichtung
- 22: Luftlaufwerk
- 23: adaptive Fahrwerksregelung
- 24: Änderungseinrichtung
- 25: Schutzstruktur
- 251: Airbag
- 252: Teleskopstangen
- 26: Käfig
- 27: Dach
- 28: Motorhaube
- 29: Sensor
- 291: Radarsensor
- 292: Kamerasensoren
- 301: C2C- Kommunikation
- 302: C2X- Kommunikation

- P1: Pfeilrichtung
- P2: Pfeilrichtung
- FKS: Fahrzeugkoordinatensystem

## Patentansprüche

1. Einrichtung (100) zur Prävention einer Unterfahrkollision zwischen einem ersten Fahrzeug (10) und einem zweiten Fahrzeug (11), wobei das zweite Fahrzeug (11) einen Unterfahrbereich (12) aufweist, **dadurch gekennzeichnet, dass** die Einrichtung (100) zum Datenaustausch mit einer Umfeldsensorik (18) und einer Auswerteeinheit (19) verbunden ist, die Kombination aus der Umfeldsensorik (18) und der Auswerteeinheit (19) eingerichtet ist, um eine unvermeidbare Unterfahrkollision zu prädizieren, und die Einrichtung (100) im Ansprechen auf eine unvermeidbare Unterfahrkollision eingerichtet ist, um ein Unterfahren des ersten Fahrzeugs (10) mittels einer Vorrichtung (20) zu vermeiden, **dadurch gekennzeichnet, dass** die Vorrichtung (20) als Schutzstruktur (25) des ersten Fahrzeugs (10) ausgebildet ist, die von einer passiven (eingefahrenen) Position in eine aktive (ausgefahrene) Position überführbar ist.

2. Einrichtung (100) nach Anspruch 1, wobei die Vorrichtung (20) als reversible Aktorik (21, 211) oder irreversible Aktorik (21, 212) des ersten Fahrzeugs (10) ausgebildet ist, wobei mittels der Aktorik (21) das erste Fahrzeug (10) derart anhebbar ist, dass eine Kollision des ersten Fahrzeugs (14) mit dem zweiten Fahrzeug (11) außerhalb des Unterfahrbereichs (12) erfolgt.

3. Einrichtung (100) nach Anspruch 2, wobei die reversible Aktorik (212) als elektrische Aktorik (2111), pneumatische Aktorik (2112) oder hydraulische Aktorik (2113) ausgebildet ist, insbesondere als Luftfahrwerk (22), adaptive Fahrwerksregelung (23) oder Änderungseinrichtung (24) der Bremslast auf Hinter- und Vorderachse.

4. Einrichtung (100) nach Anspruch 2, wobei die irreversible Aktorik (212) als pyrotechnische Vorrichtung (2121) ausgebildet ist.

5. Einrichtung (100) nach Anspruch 1, wobei die Schutzstruktur (25) als Airbag (251) ausgebildet ist.

6. Einrichtung (100) nach Anspruch 1, wobei die Schutzstruktur (25) mehrere Teleskopstangen (252) aufweist, die in der passiven Position eingefahren und in der aktiven Position derart ausgefahren sind, dass die Teleskopstangen (252) einen Käfig (26) bilden.

7. Einrichtung (100) nach Anspruch 1, wobei die Vorrichtung (20) als reversible Aktorik (211) oder als irreversible Aktorik (212) des zweiten Fahrzeugs (11) ausgebildet ist, wobei mittels der Aktorik (21) das zweite Fahrzeug (11) derart absenkbar ist, dass eine Kollision des ersten Fahrzeugs (10) mit dem zweiten Fahrzeug (11) außerhalb des Unterfahrbereiches (12) erfolgt.

8. Einrichtung (100) nach Anspruch 7, wobei die reversible Aktorik (211) als elektrische Aktorik (2111), pneumatische Aktorik (2112) oder hydraulische Aktorik (2113) ausgebildet ist.

9. Einrichtung (100) nach Anspruch 7, wobei die irreversible Aktorik (212) als pyrotechnische Vorrichtung (2121) ausgebildet ist.

10. Einrichtung (100) nach Anspruch 1, wobei die Vorrichtung (20) als Schutzstruktur (25) des zweiten Fahrzeugs (11) ausgebildet ist, die von einer passiven (eingefahrenen) Position in eine aktive (ausgefahrene) Position überführbar ist.

11. Einrichtung (100) nach Anspruch 10, wobei die Schutzstruktur (25) als Airbag (251) ausgebildet ist.

12. Einrichtung (100) nach einem der vorhergehenden Ansprüche, wobei die Umfeldsensorik (18) Sensoren (29) umfasst, die am ersten Fahrzeug (10), am zweiten Fahrzeug (11) oder innerhalb der Verkehrsinfrastruktur angeordnet sind.

13. Einrichtung (100) nach Anspruch 12, wobei das erste Fahrzeug (10) und das zweite Fahrzeug (11) zum Datenaustausch unmittelbar über eine C2C-Kommunikation (301) oder mittelbar über eine C2X-Kommunikation (302) miteinander verbunden sind.

14. Einrichtung (100) nach einem der Ansprüche 12 oder 13, wobei die Sensoren (29) zumindest teilweise als Radarsensoren (291) und/oder Kamerasensoren (292) ausgestaltet sind.
